# FASCICULE DE BREVET EUROPEEN

(11) **EP 2 532 583 B1**
(45) Date de publication et mention de la délivrance du brevet: **23.05.2018**
(21) Numéro de dépôt: 12170741.8
(22) Date de dépôt: 04.06.2012
(51) Int. Cl.: B64C 13/28, F16H 25/24

(54) **Actionneur télescopique**
Teleskopstellglied
Telescopic actuator

(30) Priorité: 06.06.2011 FR 1154898
(43) Date de publication de la demande: 12.12.2012
(73) Titulaire: Safran Landing Systems, 78140 Vélizy-Villacoublay (FR)
(72) Inventeur: Quenerch'Du, Marc, 75020 Paris (FR); Balducci, Gérard, 78640 Saint-Germain-de-la-Grange (FR)
(74) Mandataire: Parzy, Benjamin Alain

(56) Documents cités:
- EP-A1- 0 265 316
- EP-A1- 2 322 812
- WO-A1-2008/102067
- FR-A1- 2 895 482
- GB-A- 1 054 969
- GB-A- 2 475 588

## Description

L'invention concerne un actionneur télescopique, plus spécialement adapté pour des applications dans lesquelles la charge de l'actionneur tend naturellement à réduire la longueur de l'actionneur. Par exemple, un tel actionneur peut être utilisé pour la manoeuvre d'un atterrisseur d'aéronef pour lequel l'actionneur est monté de sorte qu'il se raccourcisse lorsque l'atterrisseur est déployé vers la position d'atterrissage.

Il importe que de tels actionneurs, s'ils tombent en panne ou s'ils ne sont plus alimentés, ne s'opposent pas au mouvement de l'atterrisseur vers sa position déployée alors que celui-ci est déverrouillé.

### ARRIERE-PLAN TECHNOLOGIQUE DE L'INVENTION

On connaît du document EP 2261513 des actionneurs télescopiques comportant :
- un corps définissant une cavité cylindrique d'axe longitudinal ;
- une tige montée à coulissement télescopique dans le cylindre selon ledit axe ;
- un écrou solidaire de la tige ;
- une vis mère montée sur le corps pour tourner selon ledit axe et s'étendre dans la tige pour coopérer avec l'écrou de sorte qu'une rotation de la vis mère entraîne un déplacement télescopique de la tige dans le corps ;
- des moyens d'entraînement de la vis mère en rotation.

Dans ce type d'actionneur, la vis mère est libérable axialement pour permettre un libre coulissement de la tige en cas par exemple de blocage des moyens d'entraînement en rotation de la vis mère. Cette libération permet un libre déplacement de la tige sous l'action de la charge attelée à la tige.

Ainsi, si un tel actionneur utilisé pour assurer en temps normal le déploiement et la remontée d'un atterrisseur vient à tomber en panne ou ne plus être alimenté, il suffit alors de libérer la vis mère pour permettre un déploiement de l'atterrisseur sous l'action du poids de l'atterrisseur qui tend naturellement à amener l'atterrisseur vers la position déployée.

Cependant, dans l'actionneur précité, l'action de la charge tend à allonger l'actionneur. Certains actionneurs de manoeuvre d'atterrisseurs sont montés dans le sens contraire, c'est-à-dire que la charge a tendance à raccourcir l'actionneur plutôt que de l'allonger.

L'actionneur précité n'est alors pas capable de permettre le libre déplacement de l'atterrisseur sous l'effet de son poids, puisque cet actionneur ne peut se raccourcir, sauf bien sûr à utiliser une liaison vis/écrou réversible, ce qui n'est pas toujours possible. En outre, même dans cette hypothèse, certains cas de panne provoquent le blocage en rotation de la vis mère, ce qui bloque axialement la tige.

### OBJET DE L'INVENTION

L'invention a pour objet un actionneur télescopique qui peut être raccourci sous l'action de la charge attelée à la tige, même en l'absence de réversibilité de la liaison vis/écrou.

### BREVE DESCRIPTION DE L'INVENTION

En vue de la réalisation de ce but, on propose un actionneur télescopique comportant :
- un corps définissant une cavité cylindrique d'axe longitudinal ;
- une tige montée à coulissement télescopique dans la cavité cylindrique selon ledit axe ;
- un écrou monté sur la tige pour être retenu axialement sur celle-ci par des moyens de retenue qui sont commandables pour libérer axialement l'écrou de la tige ;
- une vis mère montée dans la cavité cylindrique pour s'étendre et tourner selon ledit axe longitudinal (X) et coopérer avec l'écrou de sorte qu'une rotation de la vis mère entraîne un déplacement télescopique de la tige dans la cavité cylindrique ;
- des moyens d'entraînement de la vis mère en rotation.
Selon l'invention, les moyens de retenue comportent :
- des griffes solidaires de la tige et ayant des extrémités coopérant avec l'écrou pour le retenir axialement relativement à la tige;
- un manchon verrouilleur coiffant les griffes et monté à rotation selon l'axe de coulissement de la tige entre une position angulaire de verrouillage dans laquelle les griffes sont empêchées de fléchir, et une position angulaire de libération dans laquelle les griffes sont libres de fléchir ;
- un organe d'actionnement adapté à faire passer de façon commandée le manchon verrouilleur d'une position à une autre.

Ainsi, en libérant l'écrou, la tige peut s'enfoncer dans le corps sans que l'écrou, retenu par la vis, ne puisse s'opposer à cet enfoncement. Un tel actionneur peut être raccourci sous l'action de la charge attelée, alors même que les moyens d'entraînement de la vis seraient défaillants ou non alimentés.

### BREVE DESCRIPTION DES FIGURES

L'invention sera mieux comprise à la lumière de la description qui suit de modes particuliers de réalisation non limitatifs, en référence aux figures des dessins annexés parmi lesquelles :
- la figure 1 est une vue en coupe schématique d'un actionneur selon l'invention illustré en fonctionnement normal ;
- la figure 2 est une vue analogue à celle de la figure 1, l'actionneur étant illustré alors que les moyens de retenue ont été commandés pour libérer l'écrou de la tige ;
- la figure 3 est une vue en coupe locale d'un actionneur selon un mode particulier de réalisation de l'invention, montrant plus particulièrement la liaison entre l'écrou et la tige et les moyens de retenue associés
- la figure 4 est une vue en perspective partielle avec coupe de l'actionneur de la figure 3, les moyens de retenue étant illustrés en position de retenue ;
- la figure 5 est une vue de face des moyens de retenue dans la position illustrée à la figure 4 ;
- les figures 6 et 7 sont des figures analogues aux figures 4 et 5 respectivement, les moyens de retenue étant illustrés en position de libération.

### DESCRIPTION DES FIGURES

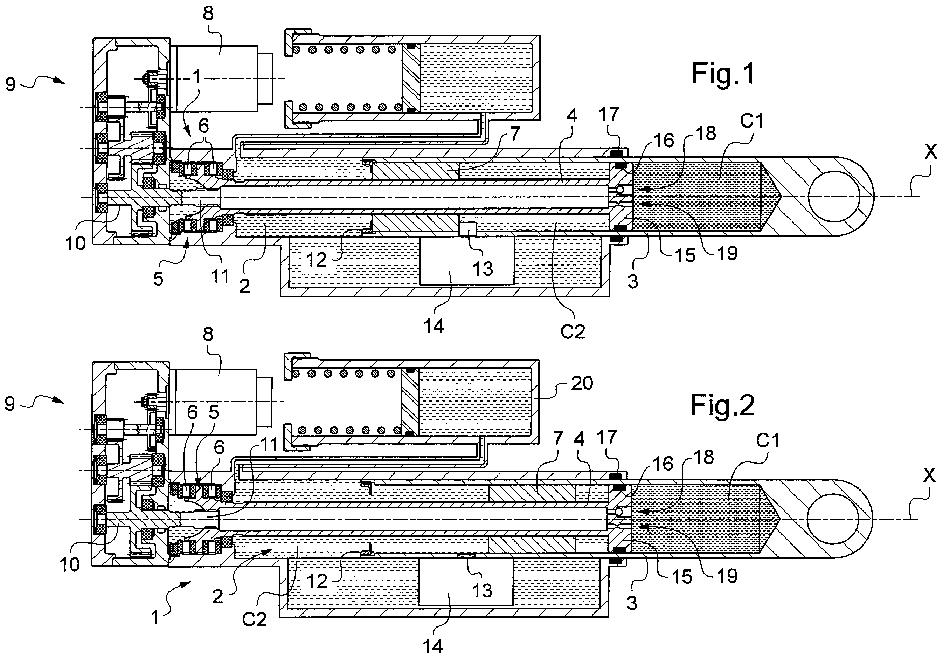

En référence à la figure 1, l'actionneur télescopique de l'invention comporte un corps 1 définissant une cavité cylindrique 2 dans laquelle une tige 3 est montée à coulissement télescopique. Des moyens d'anti-rotation non représentés empêchent la tige 3 de pivoter par rapport au corps 1. La cavité cylindrique 2 et la tige 3 s'étendent selon un axe longitudinal X le long duquel la tige 3 coulisse.

Une vis mère 4 s'étend selon l'axe X à l'intérieur de la tige 3 et est montée pour tourner sur le corps 1 au moyen d'un palier 5 retenu et monté tournant sur le corps 1 par des butées axiales 6. La vis mère 4 est filetée extérieurement pour coopérer avec un écrou 7 solidaire de la tige 3. Ainsi, une rotation de la vis mère 4 provoque un déplacement axial de la tige 3.

L'entraînement de la vis mère 4 en rotation est assurée au moyen d'un moteur 8 qui entraîne, via un réducteur 9, un arbre d'entraînement 10 ayant une extrémité 11 cannelée coopérant avec des cannelures homologues de la vis mère 4. Le moteur est par exemple un moteur électrique ou un moteur hydraulique.

Dans un mode de fonctionnement normal, l'alimentation du moteur 8 provoque la rotation de l'arbre d'entraînement 10, qui provoque la rotation de la vis mère 4, et, partant, le déplacement axial de la tige 3.

Cependant, il peut arriver que le moteur 8 ne soit plus alimenté ou que la chaîne cinématique allant du moteur 8 à la vis mère se bloque, entraînant l'immobilisation en rotation de la vis mère 4, et partant, l'immobilisation axiale de la tige 3.

Pour palier à cette situation, et pour permettre un raccourcissement de l'actionneur sous l'effet de la charge attelée à celui-ci, l'écrou 7 est retenu axialement prisonnier sur la tige 3 entre une butée d'extrémité 12 de la tige, et un doigt de retenue 13 saillant normalement dans la tige et formant un obstacle maintenant l'écrou prisonnier entre le doigt 13 et la butée 12. Le doigt 13 est mobile et, en cas de besoin, est escamoté par un actionneur de déverrouillage 14 comme illustré à la figure 2, ce qui a pour effet de désolidariser axialement l'écrou 7 de la tige 3, permettant alors le libre enfoncement de la tige 3 dans le corps 1 sous l'effet de la charge externe. Ici, l'actionneur de déverrouillage 14 est solidaire de la tige 3 et bouge avec elle.

Selon un aspect particulier de l'invention, l'actionneur comporte en outre des moyens d'amortissement hydrauliques permettant de réguler la vitesse de déplacement de la tige 3 vis-à-vis du corps 1.

Ces moyens d'amortissement hydrauliques comprennent un diaphragme 15 porté à l'extrémité de la vis mère 4 et portant un joint d'étanchéité 16 et définissant dans l'actionneurs deux chambres étanches, dont une chambre C1 dans le creux de la tige 3 et une chambre C2 dans le reste de la tige 3 et du corps 1. On remarquera que la tige 3 coulisse à étanchéité dans le corps 1 grâce à un joint d'étanchéité 17 porté par le corps 1.

Le diaphragme 15 porte deux organes permettant une mise en relation fluidique des chambres C1 et C2 : un clapet anti-retour 18 ne permettant le passage de fluide que de la chambre C2 vers la chambre C1, et un restricteur 19.

Lors d'une sortie de la tige sous l'effet du moteur 8, le fluide passe librement de la chambre C2 à la chambre C1 par le clapet anti-retour 18 qui est dans l'état ouvert. Pour éviter toute cavitation, la chambre C2 est fluidiquement connectée à un accumulateur 20 maintenant le fluide de la chambre C1 sous pression. L'accumulateur 20 sert également de réserve de fluide.

Lors d'un enfoncement de la tige, le fluide contenu dans la chambre C1 ne peut passer par le clapet anti-retour 18 et passe donc par le restricteur 19. Le fluide est alors laminé et exerce une résistance qui tend à réguler la vitesse d'enfoncement de la tige. Ceci est particulièrement utile lors d'un enfoncement sous l'effet de la charge externe, alors que le doigt 13 est escamoté.

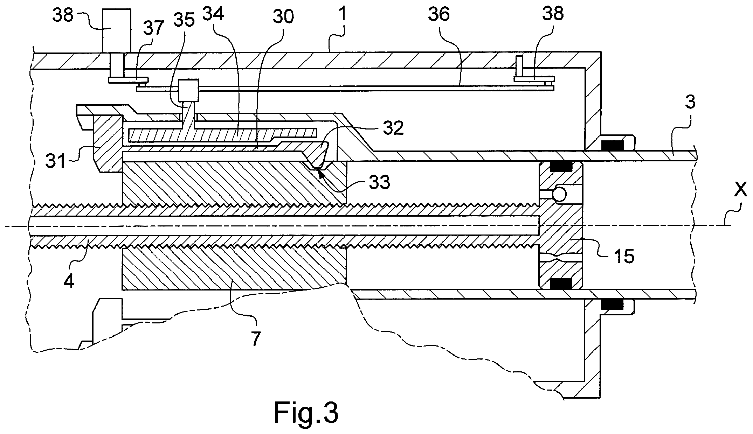

Un exemple particulier de réalisation des moyens de retenue de l'écrou sur la tige est maintenant décrit en relation avec la figure 3. Dans cet exemple, les moyens de retenue comportent des griffes associées à un manchon verrouilleur rotatif. Un tel dispositif de retenue est décrit par exemple dans le document FR 2 952 414. Il comporte des griffes 30 taillées dans une virole 31 solidaire de la tige 3. Les griffes 30 ont des extrémités 32 formant redan pénétrant dans une gorge 33 de l'écrou 7. Les griffes 30 sont associées à un manchon verrouilleur rotatif 34 monté tournant autour de l'axe X pour coiffer les griffes et pouvant prendre deux positions angulaires, dont une position de verrouillage dans laquelle le manchon empêche les griffes de fléchir, maintenant donc l'écrou 7 prisonnier axialement, et une position de libération dans laquelle le manchon autorise les griffes à fléchir, ce qui permet la désolidarisation, sous l'action de la charge externe, de l'écrou 7 vis à vis de la tige 3.

Le manchon verrouilleur rotatif 34 est solidaire d'un pion 35 saillant au travers de la tige 3 et qui coulisse le long d'une tringle 36 s'étendant longitudinalement. Le pion 35 est à cet égard terminé par un cavalier coopérant avec les côtés de la tringle 36.

La tringle 36 est montée sur le corps 1 pour être déplaçable parallèlement à elle-même selon une direction orthoradiale (donc perpendiculaire à la tringle). En l'occurrence, la tringle 36 est associée à deux manivelles 37, 38 dont les extrémités sont attelées respectivement aux extrémités de la tringle 36. Les manivelles sont montées pivotantes sur le corps 1 de l'actionneur. Les manivelles 37,38 et la tringle 36 forment ainsi trois côtés d'un parallélogramme déformable.

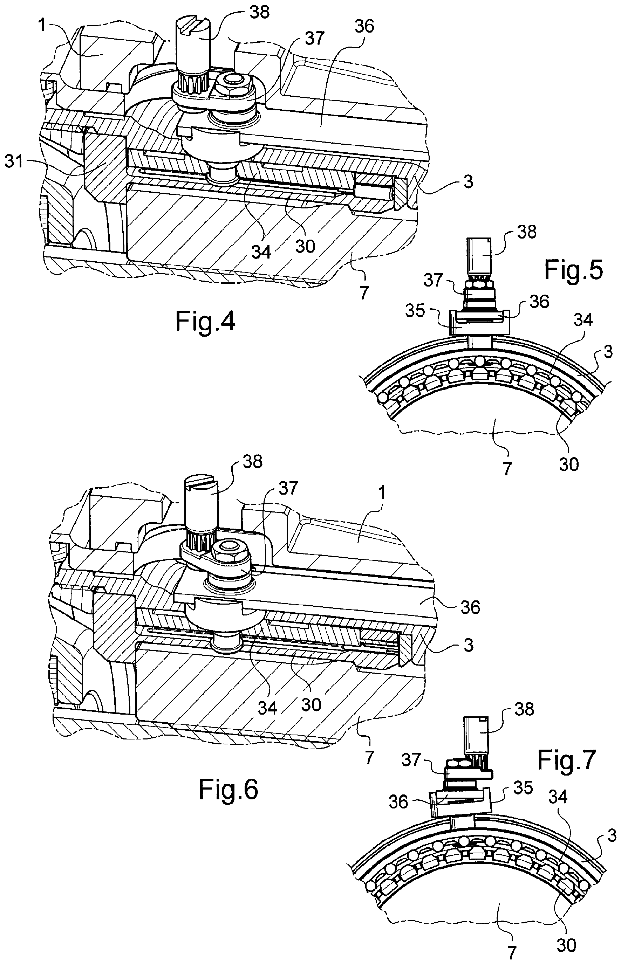

La manivelle 37 est associée à un actionneur rotatif 38 pour être pivotée de façon commandée entre une première position angulaire, dans laquelle la manivelle 37 s'étend parallèlement à la tringle comme illustré aux figures 4 et 5, et une deuxième position angulaire, dans laquelle la manivelle forme un angle avec la tringle, comme illustré aux figures 6 et 7.

Lors du passage de la première position à la deuxième position de la manivelle 37, la tringle 36 est déplacée parallèlement à elle-même sur le côté. La tringle 36 entraîne le pion 35 qui lui-même provoque la rotation du manchon verrouilleur 34 de sa position de verrouillage à la position de libération des griffes, ce qui provoque la désolidarisation de l'écrou 7 d'avec la tige 3.

Le passage inverse de la deuxième position à la première position provoque le passage du manchon verrouilleur 34 de la position de libération des griffes à la position de verrouillage de celles-ci.

La commande de libération des griffes et donc de désolidarisation de l'écrou vis-à-vis de la tige peut être exécutée quelque soit la position axiale de la tige 3 dans le corps 1 et donc la position axiale du pion 35 relativement à la tringle 36..

L'invention n'est pas limitée à ce qui vient d'être décrit, mais englobe au contraire toute variante entrant dans le cadre défini par les revendications.

En particulier, il est bien évident que les moyens de retenue commandables de l'écrou sur la tige ne sont pas limités aux dispositifs à doigt ou à griffes illustrés ici. En outre, l'organe d'actionnement de ces moyens de retenue peut être mécanique, comme illustré ici, ou de toute autre forme, par exemple un actionnement électromagnétique, du moment que cette commande permette une libération de l'écrou vis-à-vis de la tige quelque soit la position axiale de la tige dans le corps.

## Revendications

1. Actionneur télescopique comportant :
- un corps (1) définissant une cavité cylindrique d'axe longitudinal (X) ;
- une tige (3) montée à coulissement télescopique dans la cavité cylindrique selon ledit axe ;
- un écrou (7) monté sur la tige pour être retenu axialement sur celle-ci par des moyens de retenue (12, 13, 14 ; 30 à 38) qui sont commandables pour libérer axialement l'écrou de la tige ;
- une vis mère (4) montée dans la cavité cylindrique pour s'étendre et tourner selon ledit axe longitudinal (X) et coopérer avec l'écrou de sorte qu'une rotation de la vis mère entraîne un déplacement télescopique de la tige dans la cavité cylindrique ;
- des moyens (8, 9, 10) d'entraînement de la vis mère en rotation,
**caractérisé en ce que** les moyens de retenue comportent :
- des griffes (30) solidaires de la tige (3) et ayant des extrémités (32) coopérant avec l'écrou pour le retenir axialement relativement à la tige;
- un manchon verrouilleur (34) coiffant les griffes et monté à rotation selon l'axe (X) de coulissement de la tige entre une position angulaire de verrouillage dans laquelle les griffes sont empêchées de fléchir, et une position angulaire de libération dans laquelle les griffes sont libres de fléchir ;
- un organe d'actionnement adapté à faire passer de façon commandée le manchon verrouilleur d'une position à une autre.

2. Actionneur selon la revendication 1, dans lequel l'organe d'actionnement comporte une tringle (36) s'étendant longitudinalement et montée mobile sur le corps (1) pour être déplaçable parallèlement à elle-même selon une direction orthoradiale, la tringle coopérant avec un pion (35) solidaire du manchon verrouilleur (34) pour emmener le pion avec elle lors de son déplacement de sorte à provoquer la rotation du manchon verrouilleur, ce quelle que soit la position axiale de la tige relativement au corps (1) .

3. Actionneur selon la revendication 2, dans lequel la tringle (36) est montée mobile sur le corps 1 au moyen de deux manivelles montées pivotantes sur le corps (1) et ayant des extrémités reliées à des extrémités de la tringle (36) .

4. Actionneur selon la revendication 1, comportant en outre des moyens d'amortissement hydraulique (15 à 20) pour au moins réguler une vitesse d'enfoncement de la tige dans le corps alors que l'écrou a été désolidarisé de la tige.

5. Actionneur selon la revendication 4, dans lequel les moyens d'amortissement hydraulique comportent un diaphragme (15) porté à l'extrémité de la vis mère (4) et coopérant à étanchéité avec la tige (3) définissant dans l'actionneur deux chambres hydrauliques dont une chambre C1 dans un creux de la tige (3) et une chambre C2 dans le reste de l'actionneur, les chambres étant mises en communication fluidique par des moyens de passage (18,19) du fluide au travers du diaphragme.

6. Actionneur selon la revendication 5, dans lequel les moyens de passage (18,19) comportent un clapet anti-retour ne laissant passer le fluide que de la chambre C2 vers la chambre C1, ainsi qu'un restricteur adapté à laminer le fluide lors de son passage de la chambre C1 vers la chambre C2.

7. Actionneur selon la revendication 5, dans lequel la chambre C2 est reliée à un accumulateur sous pression (20) .

## Patentansprüche

1. Teleskopaktor, umfassend:
- einen Körper (1), der einen zylindrischen Hohlraum mit einer Längsachse (X) definiert;
- eine Stange (3), die in dem zylindrischen Hohlraum entlang der genannten Achse teleskopisch verschiebbar gelagert ist;
- eine Mutter (7), die auf der Stange montiert ist, um auf derselben durch Rückhaltemittel (12, 13, 14; 30 bis 38) axial zurückgehalten zu werden, wobei die Rückhaltemittel steuerbar sind, um die Mutter von der Stange axial zu lösen;
- eine Leitspindel (4), die in dem zylindrischen Hohlraum montiert ist, um sich entlang der genannten Längsachse (X) zu erstrecken und sich um diese zu drehen und mit der Mutter derart zusammenzuwirken, dass eine Drehung der Leitspindel eine Teleskopverschiebung der Stange in dem zylindrischen Hohlraum verursacht;
- Antriebsmittel (8, 9, 10) zum Drehantrieb der Leitspindel,
**dadurch gekennzeichnet, dass** die Rückhaltemittel umfassen:
- Krallen (30), die fest mit der Stange (3) verbunden sind und Enden (32) haben, die mit der Mutter zusammenwirken, um diese axial in Bezug auf die Stange zurückzuhalten;
- eine Verriegelungshülse (34), die die Krallen überdeckt und drehbar um die Verschiebungsachse (X) der Stange zwischen einer Verriegelungs-Winkelposition, in der die Krallen daran gehindert werden, sich zu biegen, und einer Freigabe-Winkelposition gelagert ist, in der die Krallen frei biegbar sind;
- ein Betätigungsorgan, das daran angepasst ist, die Verriegelungshülse auf gesteuerte Weise von einer Position in eine andere zu bringen.

2. Aktor nach Anspruch 1, bei dem das Betätigungsorgan eine Stange (36) umfasst, die sich in Längsrichtung erstreckt und an dem Körper (1) beweglich gelagert ist, um parallel zu sich in einer orthoradialen Richtung verschiebbar zu sein, wobei die Stange mit einem Stift (35) zusammenwirkt, der fest mit der Verriegelungshülse (34) verbunden ist, um den Stift mit der Stange während deren Verschiebung mitzunehmen, so dass die Drehung der Verriegelungshülse verursacht wird, und dies unabhängig von der axialen Position der Stange relativ zu dem Körper (1).

3. Aktor nach Anspruch 2, bei dem die Stange (36) beweglich an dem Körper (1) mittels zweier Kurbeln gelagert ist, die an dem Körper (1) drehbar gelagert sind und Enden haben, die mit Enden der Stange (36) verbunden sind.

4. Aktor nach Anspruch 1, ferner umfassend hydraulische Dämpfungsmittel (15 bis 20), um zumindest eine Eindrückgeschwindigkeit der Stange in den Körper zu regulieren, während die Mutter von der Stange gelöst wurde.

5. Aktor nach Anspruch 4, bei dem die hydraulischen Dämpfungsmittel eine am Ende der Leitspindel (4) getragene und auf dichte Weise mit der Stange (3) zusammenwirkende Membran (15) umfassen, die in dem Aktor zwei Hydraulikkammern definiert, darunter eine Kammer C1 in einem Hohlraum der Stange (3) und eine Kammer C2 in dem Rest des Aktors, wobei die Kammern über Durchtrittsmittel (18, 19) zum Durchtritt des Fluids durch die Membran in Fluidverbindung stehen.

6. Aktor nach Anspruch 5, bei dem die Durchtrittsmittel (18, 19) ein Rückschlagventil umfassen, das Fluid nur von der Kammer C2 in Richtung der Kammer C1 durchlässt, sowie eine Drossel, die geeignet ist, das Fluid während seines Durchtritts von der Kammer C1 in Richtung der Kammer C2 zu drosseln.

7. Aktor nach Anspruch 5, bei der die Kammer C2 mit einem Druckspeicher (20) verbunden ist.

## Claims

1. Telescopic actuator comprising:
- a body (1) defining a cylindrical cavity of longitudinal axis (X);
- a rod (3) mounted to slide telescopically in the cylinder along the said axis;
- a nut (7) mounted on the rod to be axially retained thereon by retaining means (12, 13, 14; 30 to 38) which can be made to release the nut axially from the rod;
- a lead screw (4) mounted on the cylinder to extend along and rotate about the said axis (X) and collaborate with the nut in such a way that a rotation of the lead screw causes a telescopic movement of the rod in the cylinder;
- means (8, 9, 10) for driving the rotation of the lead screw,
**characterized in that** the retaining means comprise:
- claws (30) secured to the rod (3) and having ends (32) collaborating with the nut to retain it axially relative to the rod;
- a locking sleeve (34) sitting over the claws and mounted to rotate about the axis (X) of sliding of the rod between an angular locking position in which the claws are prevented from flexing and an angular release position in which the claws are free to flex;
- an actuating member designed to cause the locking sleeve to move on command from one position to another.

2. Actuator according to Claim 1, in which the actuating member comprises a linkage (36) extending longitudinally and mounted with the ability to move on the body (1) so that it can be moved parallel to itself in an orthoradial direction, the linkage collaborating with a pin (35) secured to the locking sleeve (34) to carry the pin with it as it moves so as to cause the sleeve to rotate, this being so regardless of the axial position of the rod relative to the body (1).

3. Actuator according to Claim 2, in which the linkage (36) is mounted with the ability to move on the body (1) by means of two cranks pivot-mounted on the body (1) and having ends connected to ends of the linkage (36).

4. Actuator according to Claim 1, further comprising hydraulic damping means (15 to 20) for at least regulating the speed at which the rod enters the body when the nut has been disconnected from the rod.

5. Actuator according to Claim 4, in which the hydraulic damping means comprise a diaphragm (15) carried at the end of the lead screw (4) and collaborating in a fluidtight fashion with the rod (3) to define within the actuator two hydraulic chambers, these being one chamber C1 in a hollow of the rod (3) and one chamber C2 in the remainder of the actuator, the chambers being placed in fluidic communication by passage means (18, 19) that allow fluid to pass across the diaphragm.

6. Actuator according to Claim 5, in which the passage means (18, 19) comprise a nonreturn valve that allows fluid to pass only from the chamber C2 to the chamber C1, and a restrictor designed to throttle the fluid as it passes from the chamber C1 to the chamber C2.

7. Actuator according to Claim 5, in which the chamber C2 is connected to a pressurized accumulator (20).
